# EUROPEAN PATENT SPECIFICATION

(11) **EP 2 043 841 B1**
(45) Date of publication and mention of the grant of the patent: **22.02.2012**
(21) Application number: 07789434.3
(22) Date of filing: 22.06.2007
(51) Int. Cl.: B29C 55/06

(54) **FIXTURE FOR A STRETCHING ASSEMBLY USED IN A PLASTIC MATERIAL STRIP STRETCHING OVEN AND STRETCHING ASSEMBLY**
HALTEVORRICHTUNG FÜR EINE STRECKANORDNUNG, DIE IN EINEM STRECKOFEN FÜR KUNSTSTOFFMATERIALSTREIFEN VERWENDET WIRD UND STRECKANORDNUNG
FIXATION POUR UN ASSEMBLAGE D'ÉTIRAGE UTILISÉ DANS UN FOUR D'ÉTIRAGE DE BANDE DE MATÉRIAU PLASTIQUE ET ASSEMBLAGE D'ÉTIRAGE

(30) Priority: 23.06.2006 IT BO20060486
(43) Date of publication of application: 08.04.2009
(73) Proprietor: Sima Group S.r.l., Crespellano (BO) (IT)
(72) Inventor: BOCCAFOGLI, Sergio, I-40128 BOLOGNA (IT)
(74) Representative: Jorio, Paolo
(86) International application number: PCT/IB2007/001700
(87) International publication number: WO 2007/148216

(56) References cited:
- GB-A- 1 541 681
- US-A- 5 707 660
- US-A- 5 806 539

## Description

### TECHNICAL FIELD

The present invention relates to a fixture for a stretching assembly used in a plastic material strip stretching oven.

The plastic material is, for example, polypropylene (PP) or polyester (PET), and is used for the production of straps or the like.

### BACKGROUND ART

It is known that the "stretching bar" is used to fix the stretching point ("neck") in a given zone of the stretching oven. This allows to obtain stably dimensioned straps.

Two types of "stretching bars" are currently in use:
(1) a first type for the production of polypropylene (PP) straps; and
(2) a second type for the production of polyester (PET) straps.

In general, a "stretching bar for PP straps" comprises a circular section bar which ends with a rounded tip where the stretching of the material occurs. Furthermore, this "stretching bar" is fixed and temperature-regulated.

Instead, a "stretching bar for PET straps" comprises a motorised, circular-section, temperature-regulated bar.

The need to have two different types of stretching bars arises from the different physical and mechanical features of the two materials (i.e. PP and PET) to be treated.

The operator has thus the need to equip the stretching oven with a "stretching bar" adapted to the material by which the straps to be stretched are formed.

For instance, document US-A-5 707 660 (Van Erden at al.) discloses a fixture for a stretching assembly which comprises a cylindrical stretching bar supported by a shaft rotated about its axis by a driving unit.

However, since the apparatus always remains the same for both types of material, in order to pass from one type of strap to the other, the operator must fully remove the stretching head, to replace a first "stretching bar" with a second "stretching bar", to make the head compatible with the type of material to be processed.

This evidently implies a considerable waste of working time, also in view of the fact that, during the tooling operation of the apparatus, it obviously remains still and this negatively effects the quantity of processed straps.

### DISCLOSURE OF INVENTION

Therefore, it is the main object of the present invention to provide an fixture for a stretching assembly used in a plastic material strip stretching oven.

According to the present invention, a fixture for a stretching assembly is therefore made according to claims 1 and 2.

Furthermore, a further object of the present invention is a stretching assembly for a plastic material strip stretching oven as claimed in claim 3.

### BRIEF DESCRIPTION OF THE DRAWINGS

The present invention will now be described with reference to the accompanying drawings which illustrate a non-limitative example of embodiment thereof, in which:
- figure 1 shows an exploded view of a stretching assembly and corresponding fixture (also exploded);
- figure 2 shows a stretching assembly on which first components of the fixture shown in figure 1 are mounted;
- figure 3 shows the stretching assembly in figure 2 on which second components of the fixture shown in figure 1 are mounted;
- figure 4 shows a side view of a first component of the fixture in figure 1;
- figure 5 shows a side view of a second component of the fixture in figure 1; and
- figure 6 shows a side view of a third component of the fixture in figure 1.

### BEST MODE FOR CARRYING OUT THE INVENTION

It is known that a system for making and stabilising plastic strips comprises a series of apparatuses in series which define a particular layout.

For example, an apparatus for the temperature stabilisation treatment of plastic material strips is described in Italian patent application BO2004A000792 by the same Applicant (corresponding to WO-A-A-2006067068).

In systems of this type, it is common to insert a stretching oven provided with at least one stretching assembly upstream of the apparatus described in BO2004A000792.

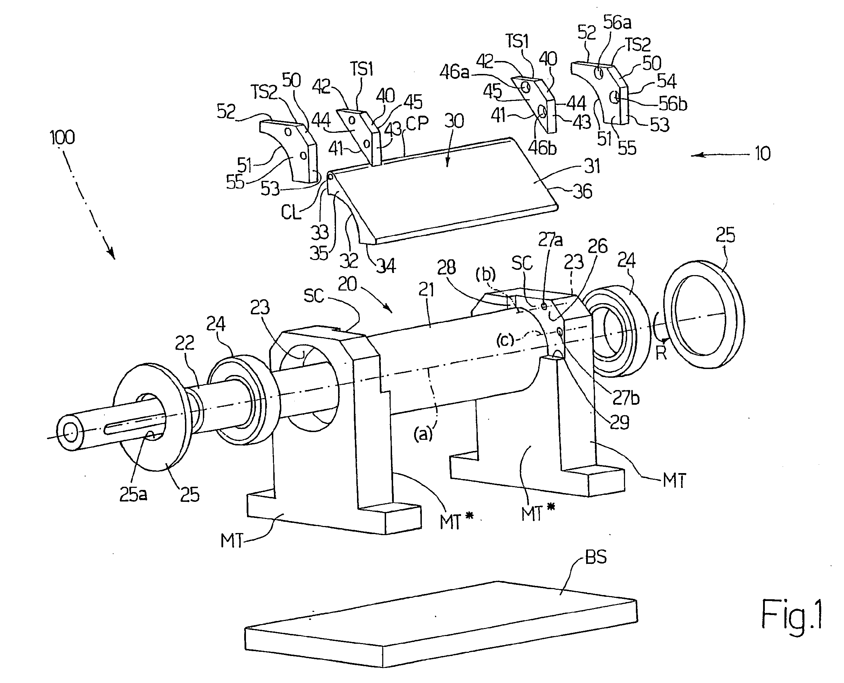

Indeed, as shown in figure 1, numeral 10 indicates as a whole a fixture for a stretching assembly 20 used in a stretching oven 100 (shown in part) for plastic material strip stretching processes (not shown).

As shown in figure 1, stretching assembly 20 comprises in known manner, a first cylindrical stretching bar 21 keyed onto a shaft 22 supported by two side pillars MT, in turn fixed with known means to a base BS.

Each side pillar MT comprises a corresponding seat 23 adapted to accommodate a corresponding thrust bearing 24 which supports shaft 22 and thus also stretching bar 21.

Each seat 23 further contemplates a corresponding circular flange 25. Specifically, left circular flange 25 is provided with a corresponding through hole 25a crossed in use by shaft 22. Each flange 25 is fixed, with known means, to the corresponding side pillar MT to close corresponding seat 23 and contain corresponding bearing 24.

Shaft 22 and first stretching bar 21 keyed onto it are rotated (by a driving unit, not shown) about a longitudinal symmetry axis (a) according to a direction and a sense identified by an arrow R.

Furthermore, first cylindrical stretching bar 21 is heated by introducing inside temperature-regulated oil distributed by an oil feeding network (not shown).

The surface temperature of the first stretching bar 21 is normally comprised between 30°C and 150°C. The temperature is selected according to the specific plastic material sued for making the strips.

As previously mentioned, the solution which contemplates the use of a first cylindrical, temperature-regulated, rotating stretching bar 21 is chosen when the strips are formed by PET.

However, when changing the material by which the strips are formed, e.g. when needing to pass to the stretching of PP strips, the first cylindrical stretching bar 21 can no longer be used.

For this purpose, mentioned fixture 10, main object of the present invention comes to the aid of the user.

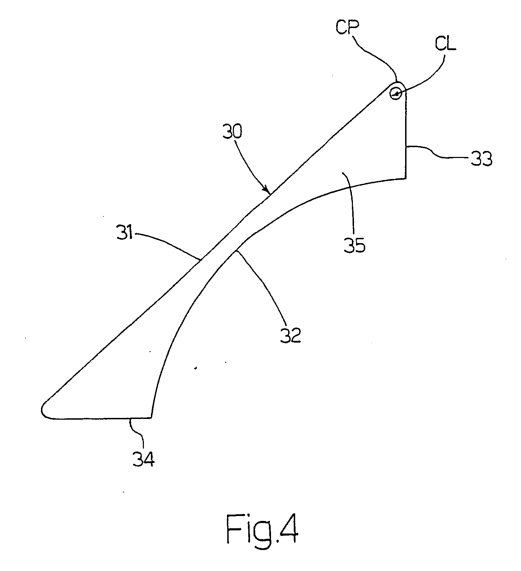

Indeed, fixture 10 comprises a second stretching bar 30 presenting a rounded tip CP (figure 4).

At tip CP there is a heating channel CL which uses the temperature-regulated oil distributed by the oil feeding network (not shown) by means of which first stretching bar 21 is fed.

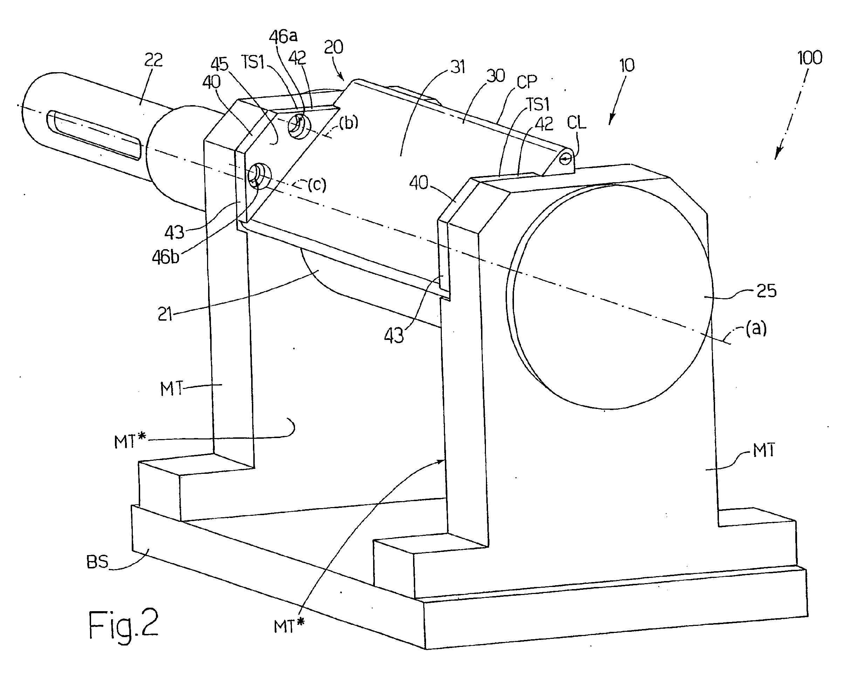

As shown in figure 2, second stretching bar 30 contemplates an essentially flat external surface 31 and a circular sector internal surface 32, joined together by two radial surfaces 33, 34 also essentially flat (figure 4).

External surface 31 and radial surface 33 are indeed joined by mentioned tip CP.

Furthermore, second stretching bar 30 contemplates two flat faces 35, 36 (figures 1, 4).

Figure 1 shows that each internal side MT* of each support MT is provided with a corresponding recess SC.

Firstly, each aperture SC comprises a wall 26 (the ideal extension of which is perpendicular to axis (a)) provided with two threaded holes 27a, 27b each having a longitudinal symmetry axis (b), respectively (c), parallel to axis (a).

Recess SC further contemplates a vertical surface 28 and a horizontal surface 29. The ideal extensions (not shown) of vertical surface 28 and of horizontal surface 29 do not cross axis (a) of shaft 22 but have an eccentricity of 4 mm in each direction (horizontal and vertical) such as to allow a stable anchoring.

Furthermore, recesses SC are at the portions of supports MT facing the upper part of first cylindrical stretching bar 21.

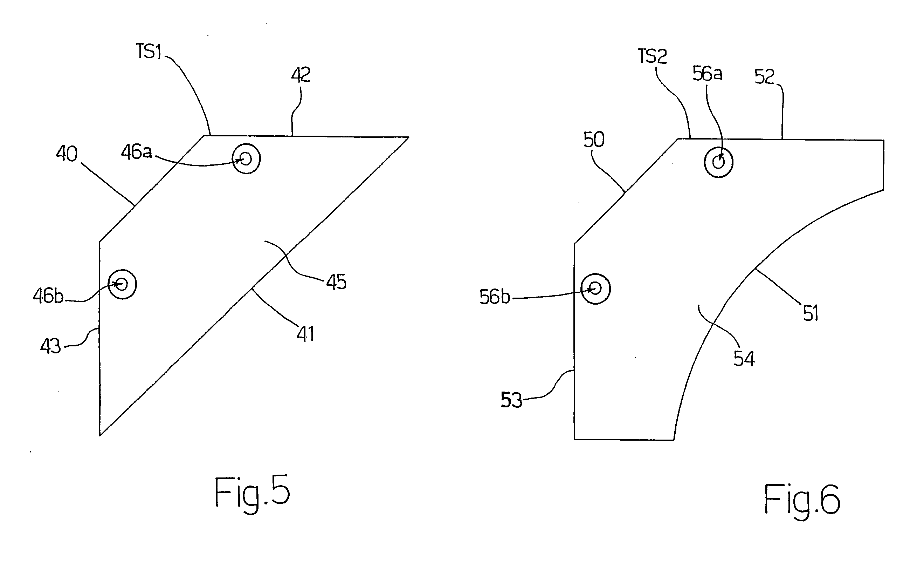

Furthermore, as shown again in figure 1, fixture 10 is further equipped with a pair of first blocks TS1 (figure 5).

Each first block TS1 presents an essentially trapezoidal shape and thus contemplates an upper surface 40, a lower surface 41 parallel to upper surface 40, and two inclined union surfaces 42; 43 between surfaces 40 and 41.

An external face 44 and an internal face 45 are thus defined on each first block.

Furthermore, on each block TS1, two through holes 46a, 46b are made, which holes are aligned in use respectively with through holes 27a, 27b, i.e. with corresponding axes (b) and (c) (figure 5) (see below).

Incidentally, the two blocks TS1 are identical, being careful that during assembly wall 26 (inside the pillar) is coupled with face 44 of the block without flared holes 46a, 46b.

In use, to go from a configuration of stretching assembly 20 adapted to the stretching of PP strips as the one shown in figure 2 it is sufficient for the operator to mount second stretching bar 30 so that its internal circular section surface 32 faces the surface of first stretching bar 21. Stretching bar 21 is not removed but, when stretching oven 100 is working, continues to turn about axis (a) according to arrow R.

In this regard, it must be noted that it is essential for first stretching bar 21 to continue to turn at a given speed according to the features of the material being machined. The rotation movement contributes to the advancement of the material through stretching oven 100. Evidently, to prevent friction between the surface of first stretching bar 21 and internal circular sector surface 32 of second stretching bar 30, such internal surface 32 presents a higher curving radius than first stretching bar 21 itself (figure 4).

Furthermore, in use surface 33 of second stretching bar 30 rests on surface 28 of recess SC, while surface 34 again of second stretching bar 30 rests on surface 29 of recess SC itself.

In use, each face 35, 35 of second stretching bar 30 rests on corresponding surface 26 of corresponding recess SC.

Two first blocks TS1, each fixed to corresponding pillar MT by means of screws (not sown) in through holes 46a, 46b made in each first block TS1 and are fastened in threaded holes 27a, 27b, are used to lock second stretching bar 30 in its working position shown in figure 2.

Therefore, in use, surface 41 of each block 40 rests on surface 31 of second stretching bar 30.

During stretching (not shown), the PP straps are rested on tip CP and subjected to traction by means of a fast drive roller (not shown) which is outside stretching oven 100.

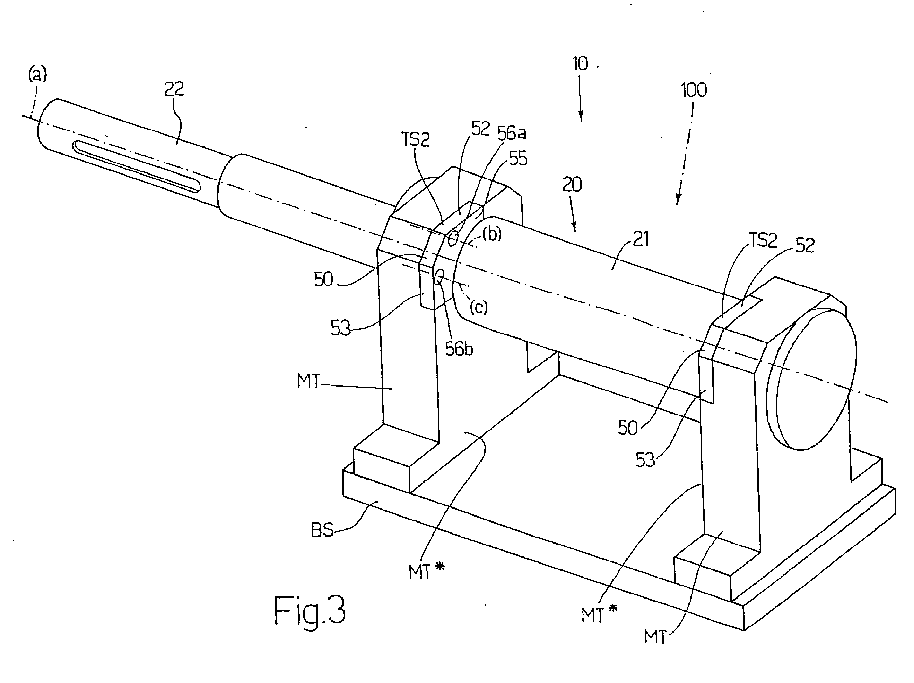

Furthermore, in order to restore the geometry of pillars MT for using first stretching bar 21, fixture 10 advantageously but not necessarily comprises two second blocks TS2, as shown in figures 1, 3, 6.

Each second block TS2 is similar to a block TS1 (but larger), and differs from the latter in that the lower surface is not flat (as lower surface 41 of first block TS1), but is arched to "mimic" the profile of first stretching bar 21.

Indeed, each block TS2 (figure 6) contemplates an upper surface 50, a lower surface 51 shaped as an arc of a circle and two inclined union surfaces 52, 53 between surfaces 50 and 51.

An external face 54 and an internal face 55 are thus defined on each second block TS2 (figure 6).

Furthermore, on each second block TS2 (figure 6), two through holes 56a, 56b are made, which holes are aligned in use, respectively, with through holes 27a, 27b, i.e. with corresponding axes (b) and (c) (see below).

Incidentally, two second blocks TS2 are identical, except for possible flaring of holes 66a, 56b on face 55, or on face 54, according to whether second block TS2 needs to be fixed to the right or to the left side pillar MT (figure 1).

Furthermore, second blocks TS2 have faces 54, 55 which nearly exactly cover surface 26 of aperture SC.

Each of two second blocks TS2 is fixed to corresponding pillar MT by means of screws (not shown) which cross through holes 56a, 56b made on each block TS2, which are fastened in threaded holes 27a, 27b.

The first main advantage of fixture 10 object of the present invention consists in the extreme simplicity with which the operator may pass from a first setting of stretching assembly 20 adapted to machine PET strips to a second setting, stretching assembly 20 again, particularly recommended for stretching PP strips, or vice versa. Evidently, the extreme assembly/disassembly simplicity of fixture 10 on stretching assembly 20 results in a considerable saving in terms of hours/work of the operator and a considerable reduction of temporary strip machining downtime.

## Claims

1. A fixture (10) for a stretching assembly (20) used in a plastic material strip stretching oven (100), said stretching assembly (20) contemplating:
- two pillars (MT) which support a shaft (22), presenting a longitudinal symmetry axis (a), on which a first cylindrical stretching bar (21) is keyed; and
- a driving unit adapted to rotate said shaft (22) about said axis (a);
said fixture (10) **characterised in that** it comprises:
a second stretching bar (30) presenting a rounded tip (CP), said second stretching bar (30) being fixable to said at least two pillars (MT) by means of fastening means (TS1) which are easy to assemble/disassemble; whereby, in use, said second stretching bar (30) faces said first cylindrical stretching bar (21).

2. A fixture (10), as shown in claim 1, **characterised in that** said fastening means (TS1) comprise two blocks (TS1), each block (TS1) presents an essentially trapezoidal shape; i.e. said block (TS1) contemplating an upper surface (40), a lower surface (41) parallel to said upper surface (40), and two inclined union surfaces (42, 43) between the upper surface (40) and the lower surface (41).

3. A stretching assembly (20) for a plastic material strip stretching oven (100), said stretching assembly (20) contemplating:
- two pillars (MT) which support a shaft (22), presenting a longitudinal symmetry axis (a), on which a first cylindrical stretching bar (21) is keyed; and
- a driving unit adapted to rotate said shaft (22) about said axis (a);
said stretching assembly (20) **characterised in that** further comprises a fixture (10) having a second stretching bar (30) presenting a rounded tip (CP), said second stretching bar (30) being fixed into a recess (SC) of each of said two pillars (MT) by means of fastening means (TS1) which are easy to assemble/disassemble; whereby said second stretching bar (30) faces said first cylindrical stretching bar (21).

## Patentansprüche

1. Eine Haltevorrichtung (10) für eine Streckbaugruppe (20), die in einem Streckofen für Kunststoffmaterialstreifen (100) verwendet wird, in Betracht ziehend:
- zwei Ständer (MT), die eine eine längs laufende Symmetrieachse (a) darstellende Welle (22), auf der eine erste zylindrische Streckstange (21) festgekeilt ist, lagern; und
- eine Antriebseinheit, die angepasst ist, die Welle (22) um die Achse (a) zu drehen;
wobei die Haltevorrichtung (10) **dadurch gekennzeichnet ist, dass** sie aufweist:
eine zweite Streckstange (30), die ein abgerundetes Ende (CP) präsentiert, die zweite Streckstange (30) an den zumindest zwei Ständern (MT) mittels Befestigungsmittel (TS1), die einfach zu montieren/demontieren sind, befestigbar ist; wobei im Gebrauch die zweite Streckstange (30) der ersten zylindrischen Streckstange (21) gegenüberliegt.

2. Eine Haltevorrichtung (10), wie in Anspruch 1 gezeigt, **dadurch gekennzeichnet, dass** die Befestigungsmittel (TS1) zwei Blöcke (TS1) aufweisen, jeder Block (TS1) eine im Wesentlichen trapezförmige Form darstellt; d.h. der Block (TS1) eine obere Fläche (40), eine untere Fläche (41) parallel zu der oberen Fläche (40) und zwei geneigte Verbindungsflächen (42, 43) zwischen der oberen Fläche (40) und der unteren Fläche (41) in Betracht zieht.

3. Eine Streckbaugruppe (20) für einen Streckofen für Kunststoffmaterialstreifen (100), wobei die Streckbaugruppe in Betracht zieht:
- Zwei Ständer (MT), die eine eine längs laufende Symmetrieachse (a) darstellende Welle (22), auf der eine erste zylindrische Streckstange (21) festgekeilt ist, lagern; und
eine Antriebseinheit, die angepasst ist, die Welle (22) um die Achse (a) zu drehen;
wobei die Streckbaugruppe (20) **dadurch gekennzeichnet ist, dass** sie weiterhin eine Haltevorrichtung (10) aufweist, die eine zweite ein abgerundetes Ende (CP) darstellende Streckstange (30) hat, die zweite Streckstange (30) in eine Vertiefung (SC) von jedem der zwei Ständer (MT) mittels Befestigungsmittel (TS1), die einfach zu montieren/demontieren sind, befestigt ist; wobei die zweite Streckstange (30) der ersten zylindrischen Streckstange (21) gegenüberliegt.

## Revendications

1. Fixation (10) pour un ensemble d'étirage (20) utilisée dans un four d'étirage de bande de matériau plastique (100), ledit ensemble d'étirage (20) comprenant :
- deux piliers (MT) qui supportent un arbre (22), présentant un axe de symétrie longitudinal (a), sur lequel une première barre d'étirage cylindrique (21) est clavetée ; et
- une unité d'entraînement adaptée pour faire tourner ledit arbre (22) autour dudit axe (a) ;
ladite fixation (10) étant **caractérisée en ce qu'**elle comprend :
une seconde barre d'étirage (30) présentant un embout arrondi (CP), ladite seconde barre d'étirage (30) pouvant être fixée auxdits deux, ou plus, piliers (MT) en utilisant des moyens de fixation (TS1) qui sont faciles à assembler/désassembler ; moyennant quoi, durant l'utilisation, ladite seconde barre d'étirage (30) fait face à ladite première barre d'étirage cylindrique (21).

2. Fixation (10) selon la revendication 1, **caractérisée en ce que** lesdits moyens de fixation (TS1) comprennent deux blocs (TS1), chaque bloc (TS1) présente une forme essentiellement trapézoïdale ; à savoir, ledit bloc (TS1) comprend une surface supérieure (40), une surface inférieure (41) parallèle à ladite surface supérieure (40), et deux surfaces d'union inclinées (42, 43) entre la surface supérieure (40) et la surface inférieure (41).

3. Ensemble d'étirage (20) pour un four d'étirage de bande de matériau plastique (100), ledit ensemble d'étirage (20) comprenant :
- deux piliers (MT) qui supportent un arbre (22), présentant un axe de symétrie longitudinal (a), sur lequel une première barre d'étirage cylindrique (21) est clavetée ; et
- une unité d'entraînement adaptée pour faire tourner ledit arbre (22) autour dudit axe (a) ;
ledit ensemble d'étirage (20) étant **caractérisé en ce qu'**il comprend en outre une fixation (10) possédant une seconde barre d'étirage (30) présentant un embout arrondi (CP), ladite seconde barre d'étirage (30) étant fixée dans un évidement (SC) de chacun desdits deux piliers (MT) en utilisant des moyens de fixation (TS1) qui sont faciles à assembler/désassembler ; moyennant quoi ladite seconde barre d'étirage (30) fait face à ladite première barre d'étirage cylindrique (21).
